Europäisches Patentamt

European Patent Office

Office européen des brevets

(19)

(11) Publication number: 0 230 711
A1

## (12) EUROPEAN PATENT APPLICATION

(21) Application number: 86305811.1

(22) Date of filing: 29.07.86

(51) Int. Cl.⁴: **F16K 15/06** , **B60T 13/52** , F16K 51/02

(30) Priority: 30.08.85 US 771219

(43) Date of publication of application:
05.08.87 Bulletin 87/32

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Parker, Donald Lee
7967 Meyers Road Middletown
Ohio 45042(US)
Inventor: Heffner, Donald Lee
1007 Nila Gay Court Miamisburg
Ohio 45342(US)

(74) Representative: Breakwell, John Neil Bower et
al
GM Patent Section Vauxhall Motors Limited
Luton Office (F6) P.O. Box No. 3 Kimpton
Road
Luton Bedfordshire LU2 OSY(GB)

(54) Vacuum check valve assembly.

(57) A vacuum check valve assembly has an axially guided poppet valve (86) providing minimum restriction to air flow. The poppet valve has a seal (96) made of a fluoro-silicone rubber which has excellent non-sticking and non-leaking characteristics over a wide temperature range.

The valve assembly may be combined with a fuel vapour-absorbent canister (334).

Fig.1

EP 0 230 711 A1

## VACUUM CHECK VALVE ASSEMBLY

This invention relates to a vacuum check valve assembly.

The invention is particularly concerned with a vacuum check valve assembly used in a vacuum supply line as a control for a vacuum-suspended brake booster supply.

US-A-3 086 544 discloses a vacuum check valve assembly of a type which has been used for many years with vacuum-suspended power brake boosters. The typical valve construction there disclosed has a valve element that is positioned in a valve chamber and essentially comprises a washer and a rubber element. The valve is contained and guided within the chamber by the chamber side wall in relation to the outer periphery of the washer. A spring in the valve chamber urges the valve element towards a condition of engagement with an annular ridge which forms a valve seat around the point of entry of the inlet conduit into the valve chamber. Since air flow must pass around the valve when it is open, the guiding function of the chamber side wall permits some lateral movement of the valve, and as a result the valve may not always be completely axially aligned with the valve seat. The resulting loss of air presented no problem in relation to small leaks that occasionally occurred when such an assembly was used with relatively large engines. However, as vehicle engines have been made smaller to achieve higher fuel economy, it has been found that less vacuum is available to operate various vehicle accessories than was the case with most vehicle engines when such check valve assemblies began to be used.

It has more recently been common to use such a vacuum check valve assembly in the vacuum conduit between the brake booster and an engine intake manifold, and to also include a charcoal filter between the manifold and the vacuum check valve as shown in US-A-4 109 464. The said patent shows the same type of vacuum check valve assembly being used as is shown in the earlier-noted patent.

The present invention is concerned with a vacuum check valve assembly of the above type which provides for improved air flow, so that the assembly is substantially less restrictive to the flow of air from the booster to the vacuum source, which is usually the engine intake manifold, thereby providing a higher level of vacuum within the booster housing than is available with a more restrictive vacuum check valve.

To this end, a vacuum check valve assembly in accordance with the present invention comprises the combination of features specified in claim I.

It has been found that in many instances a vacuum check valve assembly in accordance with the present invention will perform sufficiently well to eliminate the need for the activated charcoal canister such as is shown in the said US Patent 4,109,464. In some instances where it may be desirable to continue to use such a canister in the vacuum system, it is now proposed to incorporate the improved vacuum check valve assembly and the canister into a single housing.

In a specific embodiment of a vacuum check valve assembly in accordance with the present invention, a guided poppet valve has a valve stem extending through valve housing guide means. The poppet valve is reinforced for improved sealability. A valve member seal is engageable with a valve seat, and is made of a material which substantially eliminates cold weather sticking: the seal minimises the formation of ice crystals between the valve seal and the valve seat so that leakage of air past the valve does not normally occur, even in extremely cold weather. The material is also of a type that has improved resistance to fuel. The valve stem used for guiding the poppet valve extends along the axis of the poppet valve, whereby a greater clearance can be maintained between the outer periphery of the poppet valve and the adjacent inner wall of the valve housing, therby permitting much higher air flow rates which are subject to substantially less restriction to flow. At the same time, the valve is maintained in proper guided relation to the valve seat. Other advantages will be evident from the specific description which follows.

In the drawings:

Figure I is a longitudinal sectional view, with parts broken away, illustrating a system including one embodiment of a vacuum check valve assembly in accordance with the present invention, the system including a vacuum-suspended brake booster together with an internal combustion engine the fuel and air intake of which acts as the vacuum source for the booster;

Figure 2 is an enlarged longitudinal sectional view, with parts broken away, illustrating the vacuum check valve of Figure I, on the line 2--2 of that Figure, in the direction of the arrows;

Figure 3 is an enlarged view of a modification of the vacuum check valve assembly of Figure I, the view being similar to the view of the vacuum check valve assembly shown in that Figure, with parts broken away and in section;

Figure 4 is a view similar to Figure 3 but showing another modification of a vacuum check valve assembly in accordance with the present invention; and

Figure 5 is a view similar to Figures 3 and 4 but showing another modification wherein the vacuum check valve assembly and an activated charcoal canister arranged in series with the check valve assembly are contained in a common housing and have certain parts in common.

With reference now to Figure I of the drawings, a system I0 shown therein includes an internal combustion engine I2 of a type commonly used to power motor vehicles. The engine is schematically illustrated as having a fuel and air intake I4, including an engine intake manifold. As is well known, the engine intake manifold is commonly used as a source of vacuum to supply vacuum to certain accessories. A suitable connection I6 is provided to tap into the intake manifold and obtain vacuum therefrom.

A vacuum-suspended brake booster and master cylinder assembly I8 is suitably mounted to a portion 20 of a vehicle in which the system is installed so that the assembly I8 may be actuated by the vehicle operator in the usual manner. The assembly I8 includes a servomotor 22 and a master cylinder 24. The servomotor has a vacuum check valve assembly 26 mounted on the servomotor housing front section 28 and opening at one side into the servomotor vacuum chamber 30. The other side of the vacuum check valve assembly 26 is connected by way of a vacuum conduit 32 to the intake manifold connection I6. This provides a vacuum source for the brake booster servomotor 22.

The servomotor has a power wall 34 dividing the servomotor housing 36, of which the housing front section 28 is a part, into the vacuum chamber 30 and a variable-pressure chamber 38. The power wall 34 includes a piston 40, a flexible diaphragm 42 and a diaphragm support member 44. The outer periphery of the diaphragm 42 is sealingly secured to the housing 36, and the piston 40, the diaphragm support member 44 and the inner periphery of the diaphragm 42 are linearly moveable.

The servomotor 22 includes an input push rod 46 which is moved by the vehicle operator to control the brake system. The push rod 46 is connected to a control valve assembly 48 to control the pressure changes in the variable-pressure chamber 38. An atmospheric air pressure inlet is provided through an atmospheric air filter 50. The servomotor has an output push rod 52 which is moved by the power wall 34 upon servomotor actuation, to actuate the master cylinder assembly 24 and pressurise the brake circuitry of the vehicle.

The servomotor assembly 22 is typical of vacuum-suspended servomotors in common use in this type of application. An example of the servomotor, with a more detailed description of its operation, is found in US-A-3 249 02I.

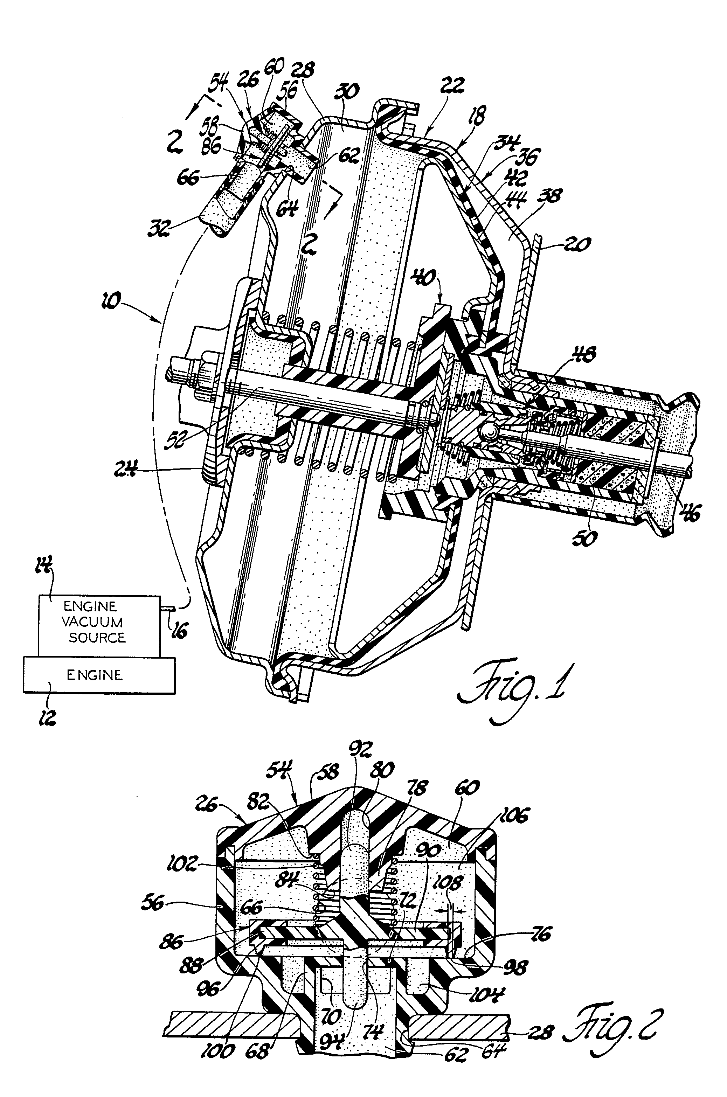

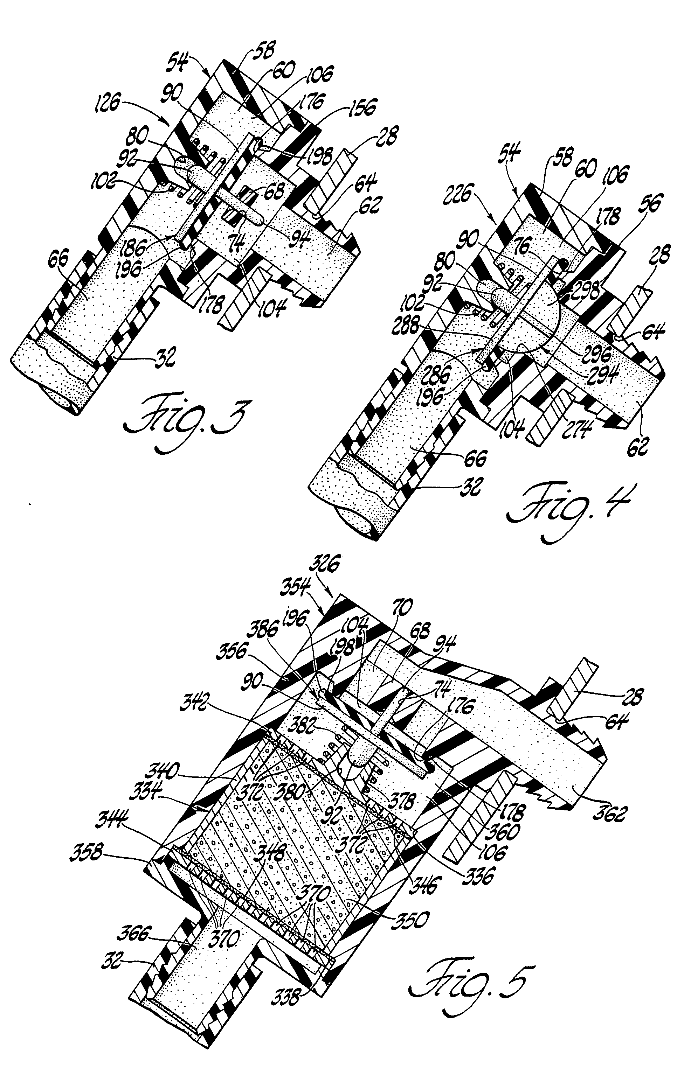

The vacuum check valve assembly 26 of Figure I is illustrated in greater detail in Figure 2. The assembly includes a housing 54 formed of housing sections 56 and 58. The housing section 58 is sealingly secured to the housing section 56 somewhat like a cover and co-operates with the housing section 56 to define a valve chamber 60. An inlet 62 is integrally formed with the housing section 56. The inlet is constructed to secure the valve assembly to the housing front section 28 by way of a booster housing front section opening 64 in sealing relation. An outlet 66 is also formed as a part of the housing section 56 and is arranged to receive the vacuum conduit 32 in sealing relation to provide communication between the valve outlet 66 and the engine intake manifold I4. The passages defined by the inlet 62 and the outlet 66 are each connected to the valve chamber 60. The housing section 56 also has a web 68 formed therein over the passage formed by the inlet 62, the web being provided with web openings 70 which provide a substantially unrestricted fluid flow connection from the inlet 62 into the valve chamber 60. The web 68 has a central part 72 which is in axial alignment with the inlet 62. An opening 74 is formed axially through the central part 72 of the web so that the central part of the web forms a guide for the valve member, as will be described. An annular valve seat 76 is defined by a surface formed as a part of the housing section 56 and generally defining a wall of the valve chamber 60 together with the web 68. As can be seen in Figure 2, the surface of the central part 72 of the web facing towards the main portion of the valve chamber 60 may be a planar extension of the surface defining the annular valve seat 76.

The valve housing section 58 is provided with a boss 78 extending into the valve chamber 60. The boss 78 has a recess opening 80 formed therein and opening into the valve chamber 60. The opening 80 is in axially spaced alignment with the web opening 74. The boss 78 has a shoulder 82 formed on an exterior portion thereof and providing a spring seat for a valve spring, as will be described. The end 84 of the boss 78 terminates in spaced relation to the central part 72 of the web. The recessed opening 80 also acts as a guide for a portion of the valve member, as will be described.

The check valve member 86 is a poppet type of check valve and is contained within the valve chamber 60. The valve member 86 has a rigid valve member body 88 formed to include a disc-like centre section 90 and a valve stem arrangement defined by a first valve stem portion 92 extending axially from one side of the centre section 90 and forming a first guided valve portion which is reciprocably received in and guided by the recessed opening 80 of the housing section 58. The stem arrangement includes a second valve stem portion 94 extending axially from the other side of the centre section 90 of the valve member and forming a second guided valve portion. The valve stem portion 94 extends through the web opening 74 for guided reciprocal movement therein. One of the valve stem portions is larger in diameter than the other, and the same is true of the openings 74 and 80, thereby preventing the valve member 86 from being accidentally assembled in the opposite axial position from that desired. For this purpose it is preferred that the valve stem portion 94 and web opening 74 have a smaller diameter than that of the valve stem portion 92 and the recessed opening 80. Since the usual manner of assembly of the valve in the housing would be to first insert the stem portion 94 through the web opening 74, it is clear that the larger valve stem portion 92 could not be inserted in this fashion because the web opening 74 is smaller in diameter than the valve stem portion: this effectively prevents mis-assembly of the valve member in the housing.

The valve member 86 has a valve member seal 96 secured to the peripheral portion of the disc-like centre section 90 of the valve body 88. One side of the annular valve member seal 96 has a surface 98 engageable with a valve seat. In the construction illustrated in Figures 1 and 2, the seat-engageable surface 98 is the outer end of a circumferentially formed valve member bead 100 which extends axially from the main part of the valve member seal 96 so as to be engageable with the annular valve seat 76 of the housing section 56. A compression coil valve spring 102 is received in the valve chamber 60 and has one spring end engaging the shoulder 82 and the other spring end engaging one side of the valve member body so that the valve member 86 is continually urged towards a condition of surface sealing engagement with the annular valve seat 76. The valve spring 102 is so proportioned, and the axial distance between the end 84 of the boss 78 relative to the facing surface of the valve member body 88 is such, that the valve member body may move against the force of the spring to fully open the valve by separating the valve member bead 100 from the annular valve seat 76 a sufficient axial distance to provide substantially no flow restriction past the bead and valve seat. At the same time, the stem 94 remains guided within the web opening 74 and the valve stem 92 moves further into the recessed opening 80. The rigid valve member body 88 extends radially outwardly so that it is axially aligned with the major portion of the valve member bead 100 to provide reinforcement for the entire valve member seal 96 and axial stability for the valve member bead 100, thereby ensuring planar sealing action of the bead 100 with the valve seat 76. The guiding action of the openings 74 and 80 on the stem portions 94 and 92, respectively, further ensures maintenance of the sealing surface of the valve member seal 96 in parallel planar relation with the valve seat 76 at all times.

When the valve member bead 100 is in sealing engagement with the seat 76 as shown in Figure 2, the valve chamber 60 is separated into a chamber inlet section 104 and a chamber outlet section 106. The chamber inlet section 104 is in fluid communication with the inlet 62 so that the entire surface area of the valve member 86 positioned radially inwardly of the seat-engageable surface 98 is exposed to pressure within the inlet 62 and therefore to the pressure in the vacuum chamber 30 of the booster 22. The chamber outlet section 106 is in full fluid communication with the outlet 66 at all times, and the pressure therein is the pressure being transmitted to the check valve assembly 26 from the engine vacuum source 14 through the vacuum conduit 32. This pressure also acts on the valve member 86 across the same effective surface as that just described in relation to the inlet pressure. The pressure also acts on the small annular seat-engaging surface area 108 which is defined by the area through which the surface 98 is in surface engagement with the annular valve seat 76. Therefore the pressure acting on the valve member 86 and contained within the chamber outlet section 106 acts over a slightly larger effective area than does the inlet pressure acting in the chamber inlet section 104 on the effective area of the valve member 86. This difference in effective areas is maintained at a minimal amount by keeping the area of the surface 108 to a minimum. The minimal contact area is also important in preventing the valve from sticking during extremely cold conditions, as will be described.

A vacuum check valve assembly 126 shown in Figure 3 is a modification of the vacuum check valve assembly 26 shown in Figures 1 and 2, and like reference numerals are used to identify like parts. The valve member 186 has a somewhat different valve member seal 196. In this instance the seal is provided on one side of the valve member disc-like centre section 90 and has a flat surface providing the seat-engageable surface 198. The annular valve seat 176 is formed on a raised bead 178 which is a part of the housing section 156. The valve member seal 196 may alternatively be formed like the valve member seal 96 of Figures 1 and 2 but without the bead 100 thereon. Essentially, the construction shown in Figure 3 has the annular bead formed on the valve housing section rather than on the valve member seal. The valve assembly 126 functions in the same manner as does the valve assembly 26 of Figures 1 and 2 as above described.

A vacuum check valve assembly 226 shown in Figure 4 is another modification of the vacuum check valve assembly shown in Figures I and 2. This assembly is illustrated as having a valve seal and valve seat arrangement generally similar to that of Figure 3 and forming a part of the valve member 286. However, a slightly different guide arrangement is illustrated. The stem 92 of the valve member 286 extends into the recessed opening 80 as before, and the valve spring I02 is positioned to act on the valve member 286 as does the spring I02 of the earlier-described Figures. However, the web 68 and the valve stem 94 have been replaced by a centring guide 294 formed on the other side of the valve member body 288 from the stem 92. The centring guide 294 is formed with two semi-circular planar sections 296 and 298 intersecting at right angles at the axis of the valve member 286 and positioned so as to prevent the valve member 286 from moving laterally to any extent relative to the point at which the inlet 62 opens into the valve chamber inlet section I04. There is no web 68. The construction of the centring guide 294 provides no flow restriction to the flow of fluid into the chamber inlet section I04. When the valve is open it also tends to divide that flow into substantially equal parts, so that flow passes all around the valve member 286 into the chamber outlet section I06 and therefore through the outlet 66. The stem 92 will continue to guide the valve member in its axial movement. If for any reason the valve member should tend to be cocked and so tend to move out of axial alignment with the inlet 62, the planar sections 296 and 298 may engage portions of the opening 274 to re-centre the valve member in the valve housing so that it is axially aligned with the inlet 62 and the recessed opening 80. Otherwise the vacuum check valve assembly of Figure 4 operates in the same manner as described above for the vacuum check valve assemblies previously described.

Figure 5 shows the combination of a vacuum check valve assembly of the type described above with a fuel vapour-adsorbing canister provided as an integrated unit. The assembly 326 includes a housing 354 formed of housing sections 356 and 358. The housing 354 defines a valve chamber 360, an inlet 362, and an outlet 366. A check valve member 386 is received in the valve chamber 360, and is illustrated as being a check valve member much like the one disclosed above in Figure 3. The check valve member may alternatively be constructed like one of those shown in the other Figures of the drawings. Similar reference numerals to those used in the other drawing figures are used to identify various portions of the check valve member and the housing with which it is associated. A major difference in construction is the provision of a canister 334 in a chamber formed in the housing section 356 and joined to the valve chamber 360 and providing an extension thereof in the direction towards the housing section 358. A shoulder 336 is formed as a part of the housing section 356 to effectively separate the valve chamber 360 from the chamber in which the canister 334 is contained. Another shoulder 338 is formed near the outer end of the canister chamber housing section 356.

The canister 334 is illustrated as being formed with a cylinder 340, an inner end 342 and an outer end 344. A screen 346 is provided against the inner end 342 on the interior side of the canister 334, and another similar screen 348 is similarly provided adjacent the outer end 344 of the canister. The interior of the cylinder 340 between the screens 346 and 348 contains a suitable material 350 which can trap or absorb fuel vapour and can release or desorb the vapour. A preferred material is activated charcoal, and it is provided in sufficient quantity to be able to contain the amount of fuel vapour which may be trapped therein between filter purging actions without allowing any of the fuel vapour to reach the inlet 362 from the outlet 366, even if the check valve member 386 should malfunction so as not to completely seal when it is supposed to be completely sealed. The housing section 358 is suitably secured to the housing section 356 after the canister 334 has been positioned in place, with the canister inner end 342 seated on the shoulder 336 and the canister outer end 344 seated on the shoulder 338. The canister may be removed and replaced by removing the housing 358 for this purpose. The outer end 344 of the canister has a series of openings 370, and the inner end 342 of the canister has a similar series of openings 372, which openings permit the flow of air from the vacuum chamber 30 of the booster 22 through the valve assembly and the canister to the outlet 366. The openings are to be provided with sufficient total area to present substantially no restriction to such flow.

The inner end 342 of the canister is also constructed to be a part of the valve assembly 386. For this purpose, it has a boss 378 formed with a recessed opening 380. A valve spring 382 is compressed between the inner end 342 of the canister and the disc-like centre section 90 of the valve member 386, as described in relatin to the earlier drawing figures. The valve stem 92 fits within the recessed opening 380 in axially sliding and guided relation, similarly to the construction shown in the earlier drawing figures. By means of this arrangement, the inner end 342 of the canister also acts as a valve guide and retention member. The inner end 342 of the canister may if required be pre-assembled as a part of the canister 334, or it may be separate from the remainder of the canister so that it may be inserted separately in engagement with the valve spring 382 and the valve stem 92 before the remainder of the canister is installed. For this purpose the inner end of the canister may fit sufficiently tightly into the housing section 356 to be retained therein whilst the remainder of the canister 354 is removed and replaced.

The valve member seal 96 of the construction shown in Figures I and 2, and the valve member seals of the other Figures, are preferably moulded in place on the valve member body. It has been found that it is also preferable to make the valve member seals from a fluoro-silicone rubber for improved fuel vapour resistance and minimisation of sticking in cold weather. The material should have a durometer hardness value of about 40 to 50 at a standard temperature of 21°C (70°F), and should increase in durometer hardness value with a decrease in ambient temperature to a durometer hardness value of more than about 60 to 70 at about minus 29°C (minus 20°F). This will not only substantially eliminate sticking of the valve seal to the valve seat under cold-weather conditions, but will also maintain good sealing characteristics throughout the range of temperatures normally encountered in vehicles, such a temperature range from a value as high as about I36°C (280°F) in the engine compartment in which the vacuum check valve assembly is normally located to as low as about minus 40°C (minus 40°F).

By reason of the valve member being guided and supported in the axial sense, it is possible to have a greater clearance around the outer periphery of the valve member in relation to the valve housing so as to minimise flow restriction in that area. It is preferred that the annular area defined by the outer periphery of the valve member 86, I86, 286 or 386 and the portion of the valve housing which is radially outwards of the outer periphery of the valve member be at least as great as the effective cross-sectional area of the inlet port formed by the inlet 62: this ensures substantially unrestricted air flow past the outer periphery of the valve member when the vacuum check valve assembly is open. A considerably greater air flow may be obtained through the vacuum check valve assembly than has been possible heretofore, and it is therefore possible to increase the size of the associated vacuum conduit such as the vacuum conduit 32, as well as the sizes of the inlet 62 and the outlet 66, to take full advantage of the decrease in restriction to flow in the vacuum check valve assembly itself. This has resulted in substantially less pressure drop in relation to flow rate, so minimising the amount of time required to re-establish the desired vacuum pressure in the vacuum chamber of the brake booster during or after booster operation, whether or not the canister containing vapour-adsorbing material is being used. At the same time, the average differential pressure for opening the vacuum check valve is maintained at less than 3.4 kPa (less than one inch of mercury). Whereas an average flow restriction at a flow rate of I4.2 cubic metres per hour (500 cubic feet per hour) of air through the vacuum check valve assembly has previously been in the range of about 6I to 95 kPa (I8 to 28 inches of mercury), the vacuum check valve assembly in accordance with the present invention as shown in Figures I to 4 has an average flow restriction at this flow rate of less than I0.I kPa (3 inches of mercury). The valve has also minimised the amount of leakage when the valve is supposed to be fully closed, and it has been equal to the best of valves in current production at moderately high temperatures. For example, at I00°C (2I2°F), tests have indicated that no leakage has occurred, whereas on some curent production units as many as 20% of the valves will have some leakage at this temperature. The vacuum check valve assembly in accordance with the present invention has considerably decreased valve leakage at cold-weather temperatures, as well as valve sticking at cold-weather temperatures. For example, a vacuum check valve assembly in accordance with the present invention had no leaks and did not stick at minus I8°C (0°F). The valve embodying the invention also showed dramatic improvement in leakage and potential failure with a pressure differential thereacross of as little as 6.7 kPa (2 inches of mercury) and up to 67 kPa (20 inches of mercury), in contrast to what was the case with various conventional valves used by different manufacturers. Due to the added flow capabilities of the vacuum check valve assembly with minimal restriction, combined with the improved sealing and anti-sticking characteristics, it has been found that there is usually no need to use a canister of vapour-adsorbent material with the vacuum check valve assembly in accordance with the present invention. Since the vapour-adsorbent material is provided to prevent fuel vapour from entering the vacuum chamber of the brake booster, the use of a very dependable valve under all conditions of operation has minimised the likelihood of fuel vapour passing the valve at any time and entering into the brake booster assembly.

In an installation in which a fuel vapour-adsorbent canister is desirable, the arrangement of Figure 5 is a preferred embodiment.

The invention thus makes available a vacuum check valve assembly which gives reduced flow restriction through the valve, as well as guiding of the valve to prevent misalignment and prevent sticking, thereby overall providing a more efficient, positively functioning valve.

PARTS LIST

12 engine (of a motor vehicle)
14 vacuum source
16 intake manifold connection
18 vacuum-suspended power brake booster
22 servomotor (of 18)
26 vacuum check valve assembly
30 vacuum chamber (of 22)
32 vacuum conduit
54 housing (of 26)
56 second housing section (of 54)
58 first housing section (of 54)
60 valve chamber
62 inlet (into 60)
66 outlet (from 60; to 14)
68 web (in 56)
72 central part (of 68)
74 opening (in 72)
76 annular valve seat (part of 56)
80 recessed opening (in 58)
86 poppet-type check valve member (in 60)
88 rigid valve member body (of 86)
90 disc-like centre section (of 88)
92 first stem (of 88)
[first guided valve portion]
94 second stem (of 88)
[second guided valve portion]
96 annular valve seal (secured to 90)
98 valve seat-engageable surface (of 96)
100 annular bead means (of 96)
102 valve spring (in 60)
334 filter unit
342 one end (of 334)
350 vapour absorption means
354 housing (of 386)
386 check valve assembly

**Claims**

1. A vacuum check valve assembly comprising:
a housing (54) having
a first housing section (58) and a second housing section (56), the first and second housing sections (58 and 56) being secured together to define a valve chamber (60),
the housing further having
an inlet (62) for air flow into the valve chamber - (60) and an outlet (66) for air flow out of the valve chamber (60), the outlet (66) being adapted to be connected to a vacuum source (14) such as the intake of an internal combustion engine and the inlet (62) being adapted to be connected to a vacuum-powered device such as a vacuum-suspended power brake booster (18);
a poppet-type check valve member (86) received in the valve chamber (60), the check valve member (86) comprising
a rigid valve member body (88) having a disc-like centre section (90), a first stem (92) extending axially from one side of the centre section (90) and forming a first guided valve portion, a second stem (94) extending axially from the other side of the centre section (90) and forming a second guided valve portion,
an annular valve seal (96) secured to the peripheral portion of the disc-like centre section (90) of the valve body (88),
one side of the annular valve seal (96) having a valve seat-engageable surface (98);
the valve housing (54) having
a recessed opening (80) in one (58) of the housing sections (58 and 56) receiving the first guided valve portion (92) therein for guided reciprocal movement,
a web (68) in the other (56) of the housing sections (58 and 56) formed to extend into the valve chamber (60), the web (68) having a central part (72) in axial alignment with the inlet (62) and with the recessed opening (80), the central part (72) of the web (68) having an opening (74) formed axially therethrough and receiving the second guided valve portion (94) therein for guided reciprocal movement, an annular valve seat (76) formed as a part of the other housing section (56) and extending about the inlet (62) towards the valve chamber - (60), the annular valve seat (76) being sealingly engageable with the seat-engageable surface (98) of the annular valve seal (96);
the valve seal (96) or the valve seat (76) having annular bead means (100) formed thereon for engaging, respectively, the valve seat (76) or the valve seal (96) in sealing relation with minimum effective contact area;
and a valve spring (102) in the valve chamber (60) acting on the valve member (86) and continually urging the valve seal (96) towards a condition of sealing engagement of the valve seal (96) with the valve seat (76);
the rigid valve member body (88) providing reinforcement for the valve seal (96) to ensure planar sealing action with the valve seat (76);
the valve seal (96) being of a rubber-like material having a durometer hardness value of about 40 to 50 at a temperature of about 21°C (70°F) and increasing in durometer hardness value with a decrease in ambient temperature to a value of no more than about 60 to 70 durometer at a temperature of about minus 29°C (minus 20°F) so as to substantially eliminate sticking of the valve seal - (96) to the valve seat (76) under cold-weather conditions while maintaining good sealing characteristics;

the valve spring (l02) having a spring rate co-operating with the large effective area of the valve member (86) in relation to the minimal effective contact area of the sealing engagement of the valve seal (96) with the valve seat (76) to permit a low pressure differential acting across the valve member (86) to open the valve member (86) relative to the valve seat (76) and thereby permit flow through the check valve assembly (26), the said low pressure differential being about 3.4 kPa (l inch of mercury) differential pressure acting across the valve member (86);

the check valve assembly (26) when opening providing an average flow restriction therethrough of about 6.7 to l3.5 kPa (2 to 4 inches of mercury) at an average flow rate of about l4.2 cubic metres per hour (500 cubic feet per hour).

2. A vacuum check valve assembly according to claim l, characterised in that the annular valve seal (96) is made of a rubber-like fluoro-silicone material and is moulded on to the disc-like centre section (90) of the valve body (88) so as to circumferentially enclose the outer periphery thereof and provide the said seat-engagable surface (98), the poppet valve guide stems (92 and 94) and openings (74 and 80) co-operating to maintain the valve member (86) in sufficient axial alignment for the valve seal (96) and the valve seat (76) to be in engageable axial alignment, the guide stems (92 and 94) and openings (74 and 80) and the reinforcing of the valve seal (96) by the disc-like centre section (90) co-operating to maintain the seat-engageable surface (98) and the valve seat (76) in parallel planar relation to prevent leakage therebetween when the seat-engageable surface (98) and the valve seat (76) are in closed valve engagement.

3. A vacuum check valve assembly according to claim l or 2, characterised in that the valve guide stem (92) and associated guide opening (80) on one side of the disc-like centre section (90) of the valve body (88) have larger diameters than the valve guide stem (94) and associated guide opening (74) on the other side of the disc-like centre section (90), thus preventing assembly of the valve member (86) in the valve chamber (60) in a reversed axial position, and a low pressure differential acting across the valve member (86) in the direction towards the outlet (66) is effective to open the valve member (86) relative to the valve seat - (76).

4. A vacuum check valve assembly according to any one of claims l to 3, characterised in that the vacuum check valve assembly (26) is connected in a vacuum conduit (32) extending from a vacuum chamber (30) of a vacuum-suspended power brake booster (l8) to an intake manifold (l6) adapted to receive fuel and air for the engine (l2) of a motor vehicle, with the outlet (66) of the housing (54) of the vacuum check valve assembly (26) connected to the vacuum chamber (30) of the booster (l8) and the inlet (62) of the housing (54) of the vacuum check valve assembly (26) connected to the booster (l8), and with the vacuum check valve assembly (26) having its check valve member (86) normally closed to prevent the flow of air through the check valve assembly (26) in either direction, but with the check valve member (26) permitting air to flow from the booster (l8) through the vacuum conduit - (32) to the intake manifold (l6) when a pressure differential acting across the check valve assembly (26) in the direction towards the engine intake manifold (l6) opens the check valve member (86).

5. A vacuum check valve assembly according to any one of claims l to 4, characterised in that the valve seat (76) of the check valve assembly (26) is disposed in the valve chamber (60) and positioned in axial alignment with the housing inlet (62), the poppet valve member (86) is peripherally spaced within the valve chamber (60) relative to the housing (54) so as to allow substantially unrestricted air flow past the poppet valve member (86) when the vacuum check valve assembly (26) is open, the disc-like centre section (90) of the rigid valve member body (88) receives and supports the valve seal (96) and reinforces the valve seal (96) against distortion relative to the valve seat (76) to ensure full sealing engagement between the valve seal - (96) and the valve seat (76), the check valve assembly (26) and the vacuum conduit (32) permit air flow therethrough with an average valve assembly flow restriction of 6.7 to l0.l kPa (2 to 3 inches of mercury) at an average air flow rate of l4.2 cubic metres per hour (500 cubic feet per hour) after the valve member (86) has moved from the valve seat (76) to open the valve assembly (26) at an average opening pressure differential of l.7 to 3.4 kPa (0.5 to l.0 inches of mercury), and the rubber-like valve seal (96) has full sealing capability throughout a temperature range of l36°C (280°F) to minus 40°C (minus 40°F).

6. A vacuum check valve assembly according to any one of claims l to 5, characterised in that the housing (354) of the check valve assembly (386) also includes a vapour absorption chamber of a vapour absorption assembly, a filter unit (334) is received within the vapour absorption chamber and has vapour absorption means (350) therein, the filter unit (334) is in full fluid flow relation to the valve chamber (60) and the housing outlet (66) so that any tendency to reverse flow from the engine intake manifold (l6) into the booster (l8) is prevented by the check valve assembly (386), with the vapour absorption means (350) absorbing any fuel vapours tending to pass through the vacuum conduit (32) towards the booster (l8), all air flowing from the booster (l8) to the intake manifold (l6) through the inlet (62) opens the check valve member (86) and flows first through the valve chamber - (60) and then through the filter unit (334), desorbing any fuel vapours absorbed by the vapour absorption means (350) and entraining them in the air flow to the intake manifold (l6), and the filter unit (334) has one end (342) forming a wall of the valve chamber (60) and receives one end of one (92) of the guide-forming valve stems (92 and 94) in guiding relation permitting limited axial movement of the valve member (86).

7. A vacuum check valve assembly according to any one of claims l to 6, characterised in that the durometer hardness value of the valve seal (96) changes by no more than 35% with a temperature change from 2l°C (70°F) to minus 29°C (minus 20°F), the area of sealing engagement contact between the valve member (86) and the valve seat (76) is annular substantially line contact, the area of the valve member (86) subject to pressure differentials between the inlet (62) and the outlet (66) is at least the full effective cross-sectional area of the inlet (62), the relative sizes of the said areas, the minimum valve-sticking characteristic of the valve member seal contact surface (98) and the spring rate of the valve spring (l02) acting in combination are such that the sensitivity of response of the valve member (86) to such pressure differentials throughout the operating temperature range is such that the valve member (86) will move from full sealing engagement with the valve seat (76) to a substantially full-flow open position when the pressure differential acting in the direction towards the engine intake manifold (l6) is less than 3.4 kPa - (one inch of mercury), and the annular area defined by the valve member periphery and the valve housing (54) radially outwardly thereof is at least as great as the effective cross-sectional area of the inlet (62) so as to provide minimum restriction to air flow past the valve member (86) when the check valve assembly (26) is open, the restriction to flow of air through the check valve assembly - (26) at an average measured flow rate of l4.2 cubic metres per hour (500 cubic feet per hour) being no more than l0.l kPa (3 inches of mercury), and being less at lesser average flow rates.

*Fig. 1*

ENGINE VACUUM SOURCE

ENGINE

*Fig. 2*

Fig.3

Fig.4

Fig.5

## DOCUMENTS CONSIDERED TO BE RELEVANT

EP 86305811.1

| Category | Citation of document with indication, where appropriate, of relevant passages | Relevant to claim | CLASSIFICATION OF THE APPLICATION (Int. Cl.4) |
|---|---|---|---|
| A | US - A - 4 109 464 (WICKLAND) <br> * Column 2, line 44 - column 4, line 59; fig. 2 * | 1,4-6 | F 16 K 15/06 <br> B 60 T 13/52 <br> F 16 K 51/02 |
| D,A | US - A - 3 086 544 (YOST) <br> * Column 1, line 9 - column 2, line 43; fig. 1 * | 1,4,5 | |
| A | DE - A1 - 2 639 921 (A.TEVES GMBH) <br> * Totality * | 1,4,6 | |
| A | US - A - 2 301 276 (F.S.GUSSICK) <br> * Totality * | 1-3,5 | |

TECHNICAL FIELDS SEARCHED (Int. Cl.4)

F 16 K 15/00

F 16 K 51/00

F 15 B 15/00

G 05 D 16/00

B 60 T 13/00

The present search report has been drawn up for all claims

| Place of search | Date of completion of the search | Examiner |
|---|---|---|
| VIENNA | 19-03-1987 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82